# EUROPÄISCHE PATENTSCHRIFT

(11) **EP 1 652 566 B1**
(45) Veröffentlichungstag und Bekanntmachung des Hinweises auf die Patenterteilung: **10.12.2008**
(21) Anmeldenummer: 04025739.6
(22) Anmeldetag: 29.10.2004
(51) Int. Cl.: B01D 35/027

(54) **Filtervorrichtung sowie Vorratstank für Hydrauliköl mit einer derartigen Filtervorrichtung**
Filter device and reservoir for hydraulic oil provided with such a filter device
Dispositif de filtration et réservoir pourvu d'un tel dispositif de filtration

(43) Veröffentlichungstag der Anmeldung: 03.05.2006
(73) Patentinhaber: ARGO-HYTOS GmbH, 76703 Kraichtal (DE)
(72) Erfinder: Mössinger, Klaus, 74182 Obersulm (DE); Baumgärtner, Reinhard, 76689 Karlsdorf (DE)
(74) Vertreter: Hoeger, Stellrecht & Partner Patentanwälte

(56) Entgegenhaltungen:
- DE-C- 946 407
- DE-U1- 8 700 021
- GB-A- 1 148 621

## Beschreibung

Die Erfindung betrifft eine Filtervorrichtung zum Filtrieren eines Hydrauliköls, mit einem Gehäuse, das eine Einführöffnung aufweist, die mittels eines Deckels dicht verschließbar ist, und in dem ein Filterelement angeordnet ist, das einen hohlzylinderförmigen Mantel mit einem Filtermaterial umfasst, an dessen dem Deckel zugewandter Stirnseite eine Endscheibe mit einer Auslassöffnung angeordnet ist, wobei das Hydrauliköl dem Filterelement in radialer Richtung zuführbar und über die Auslassöffnung abführbar ist.

Außerdem betrifft die Erfindung einen Vorratstank für Hydrauliköl mit einer derartigen Filtervorrichtung.

Filtervorrichtungen der eingangs genannten Art kommen in Hydrauliksystemen zum Einsatz und ermöglichen es, das Hydrauliköl zu filtrieren, so dass das Hydrauliksystem über lange Betriebszeiten störungsfrei und mit geringem Verschleiß betrieben werden kann. Die Filtervorrichtung weist hierzu ein Filterelement auf mit einem Filtermaterial, das einen hohlzylinderförmigen Mantel bildet. Das Filterelement kann über eine Einführöffnung in das Gehäuse der Filtervorrichtung eingesetzt und diesem bedarfsweise entnommen werden. Die Einführöffnung lässt sich mittels eines Deckels dicht verschließen. Aus der Patentschrift DE 946 407 C ist ein Filterelement bekannt, dem zu filtrierendes Öl über eine Rücklaufleitung und über Einlassöffnungen in einer oberen Endscheibe zugeführt werden kann. Das Öl durchströmt das Filterelement radial von außen nach innen und wird über eine Auslassöffnung in einer unteren Endscheibe abgeführt. Das Filterelement ist über eine Einführöffnung in ein Gehäuse einführbar, und die Einführöffnung ist mittels eines Deckels verschließbar. In einer Gehäusewandung verläuft eine Bohrung, die vom Deckel, wenn dieser in die Einführöffnung eingesetzt ist, verschlossen wird. Die Bohrung verbindet die Rücklaufleitung mit einem stromabwärts des Filterelements angeordneten Bereich des Gehäuses. Wird der Deckel der Einführöffnung entnommen, so kann über die Rücklaufleitung in das Gehäuse einströmendes Öl das Filterelement umgehen.

Es sind auch Filtervorrichtungen bekannt, bei denen das zu filtrierende Hydrauliköl dem Filterelement in radialer Richtung zugeführt wird, so dass es von außen nach innen durch das Filtermaterial hindurchströmt, wobei es anschließend das Filterelement in axialer Richtung über eine stirnseitig angeordnete Auslassöffnung verlassen kann. Der Bereich zwischen der Auslassöffnung und dem Deckel ist während des Betriebes der Filtervorrichtung mit gefiltertem Hydrauliköl gefüllt. Soll das Filterelement gewechselt werden, so wird hierzu der Deckel vom Gehäuse abgenommen. Es besteht dann aber die Gefahr, dass das zwischen der Auslassöffnung und dem Deckel befindliche Hydrauliköl über die Einführöffnung aus dem Gehäuse herausströmt und dadurch den außenliegenden Bereich des Gehäuses verschmutzt. Diese Gefahr besteht insbesondere bei Vorratstanks für Hydrauliköl, die mit einer derartigen Filtervorrichtung ausgestattet sind.

Aufgabe der vorliegenden Erfindung ist es, eine Filtervorrichtung der eingangs genannten Art derart weiterzubilden, dass beim Auswechseln des Filterelementes die Gefahr eines Austritts von Hydrauliköl über die Einführöffnung vermindert wird.

Diese Aufgabe wird durch eine Filtervorrichtung mit den Merkmalen von Patentanspruch 1 gelöst.

Wird bei der erfindungsgemäßen Filtervorrichtung zum Auswechseln des Filterelements der Deckel vom Gehäuse abgenommen, so wird dadurch eine Durchlassöffnung freigegeben, über die der stromabwärts der Auslassöffnung gelegene Bereich, der mit gefiltertem Hydrauliköl gefüllt ist, mit dem stromaufwärts des Filtermaterials gelegenen Bereich in Strömungsverbindung steht.

Die Angaben "stromaufwärts" und "stromabwärts" beziehen sich vorliegend auf die Strömungsrichtung des Hydrauliköls beim Durchströmen der Flitervorrichtung. Somit kann beim Abnehmen des Deckels das unmittelbar unterhalb des Deckels befindliche gefilterte Hydrauliköl in den stromaufwärts des Filtermaterials gelegenen Bereich zurückströmen, noch bevor der Deckel die Einführöffnung vollständig freigibt. Die Gefahr, dass beim Auswechseln des Filterelementes Hydrauliköl über die Einführöffnung aus dem Gehäuse herausstömt, wird dadurch ganz erheblich vermindert. Das Gehäuse bildet erfindungsgemäß eine rohrförmige, vorzugsweise kreiszylinderförmige Seitenwand aus, die zumindest den dem Deckel zugewandten Endbereich des Filterelements in Umfangsrichtung umgibt und sich in Richtung der Einführöffnung über eine Stufe erweitert, wobei die Druchlassöffnung an der Stufe angeordnet ist.

Vorzugsweise umfasst die Filtervorrichtung eine Auffangwanne, die zwischen der Endscheibe und dem Deckel angeordnet ist und die die mindestens eine Durchlassöffnung aufweist. Wird bei einer derartigen Ausgestaltung der Deckel abgenommen, so kann gefiltertes Hydrauliköl von der Auffangwanne aufgenommen werden, von der aus das Hydrauliköl über die Durchlassöffnung entwelchen kann. Die Auffangwanne bildet somit einen Überlaufschutz, indem sie beim Abnehmen des Deckels ein Auffangvolumen bereitstellt, das mit Hydrauliköl befüllt werden kann und das über die mindestens eine Durchlassöffnung entleert werden kann.

Erfindungsgemäß weist die Filtervorrichtung ein am Deckel gehaltenes Dichtelement auf, das bei geschlossenem Gehäuse an der mindestens einen Durchlassöffnung dicht anliegt und das durch Abnehmen des Deckels vom Gehäuse von der Durchlassöffnung entfernbar ist. Mittels des Dichtelementes kann während des Betriebes der Filtervorrichtung die Durchlassöffnung abgedichtet werden, so dass gefiltertes Hydrauliköl nicht über die Durchlassöffnung von dem stromabwärts der Auslassöffnung gelegenen Bereich in den stromaufwärts des Filtermaterials gelegenen Bereich gelangen kann. Wird jedoch zum Auswechseln des Filterelementes der Deckel vom Gehäuse abgenommen, so wird dadurch gleichzeitig das Dichtelement von der Durchlassöffnung entfernt, so dass nunmehr gefiltertes Hydrauliköl über die Durchlassöffnung in den stromaufwärts des Filtermaterials angeordneten Bereich zurückströmen kann, bevor die Einführöffnung vom Deckel vollständig freigegeben wird.

Vorzugsweise ist der Deckel mittels des Dichtelementes flüssigkeitsdicht mit dem Gehäuse verbindbar. Bei einer derartigen Ausführungsform übernimmt das Dichtungselement eine doppelte Dichtfunktion. Zum einen kann mittels des Dichtelementes während des Filterbetriebes die Durchlassöffnung zwischen dem stromabwärts der Auslassöffnung gelegenen Bereich und dem stromaufwärts des Filtermaterials gelegenen Bereich zuverlässig abgedichtet werden. Zum anderen kann mittels desselben Dichtelementes auch die Einführöffnung abgedichtet werden. Wird der Deckel zum Auswechseln des Filterelementes vom Gehäuse abgenommen, so gibt das Dichtelement zunächst die Durchlassöffnung frei, so dass zwischen der Auslassöffnung und dem Deckel befindliches Hydrauliköl über die Durchlassöffnung zum stromaufwärts des Filtermaterials gelegenen Bereich strömen kann, und anschließend wird vom Dichtelement beim weiteren Abnehmen des Deckels auch die Einführöffnung vollständig freigegeben, wobei jedoch zu diesem Zeitpunkt nicht mehr die Gefahr besteht, dass Hydrauliköl über die Einführöffnung aus dem Gehäuse herausströmt, da das Hydrauliköl bereits über die Durchlassöffnung abströmen konnte.

Günstig ist es, wenn das Dichtelement in axialer Richtung auf die Durchgangsöffnung aufsetzbar und von dieser abhebbar ist. Die Durchgangsöffnung kann hierzu auf ihrer der Einführöffnung zugewandten Oberseite von einer Dichtfläche begrenzt sein, die mit dem Dichtelement zusammenwirkt.

Das Dichtelement ist vorzugsweise am Deckel gehalten und kann dadurch zusammen mit dem Deckel von der Durchlassöffnung entfernt werden. Günstig ist es hierbei, wenn der Deckel das Dichtelement untergreift. So kann beispielsweise vorgesehen sein, dass am Deckel ein Stützring gehalten ist und das Dichtelement zwischen dem Stützring und einer Deckenwand des Deckels positioniert ist.

Bei einer bevorzugten Ausführungsform umfasst der Deckel einen in das Gehäuse eintauchenden Kragen, an dem das Dichtelement angeordnet ist, So kann beispielsweise vorgesehen sein, dass das Dichtelement einen den Kragen in umfangsrichtung umgebenden Dichtring ausbildet.

Von Vorteil ist es, wenn die Einführöffnung den Rand einer Auffangwanne definiert, deren Boden von der Stufe und deren Umfangswand von einem von der Stufe abstehenden Bund der Seitenwand des Gehäuses gebildet ist. Die Stufe ist in axialem Abstand zur Einführöffnung angeordnet, so dass zwischen der Stufe und der Einführöffnung in Form der Auffangwanne ein Überlaufschutz bereitgestellt ist.

Vorzugsweise verläuft die Stufe bezogen auf die Mittelachse des Filterelements radial nach außen. Die Stufe kann dadurch eine gut zugängliche Auflagerfläche für das Dichtungselement ausbilden, das in axialer Richtung auf die Stufe aufsetzbar ist.

Vorzugsweise ist an der Stufe auf der radial innen gelegenen Seite der mindestens einen Durchlassöffnung eine umlaufende Dichtkante angeordnet. Die Dichtkante wirkt mit dem Dichtelement zusammen, das in axialer Richtung auf die Stufe aufsetzbar ist und beim Abnehmen des Deckels vom Gehäuse in axialer Richtung von der Stufe anhebbar ist.

Günstig ist es, wenn auch an der radial außen gelegenen Seite der mindestens einen Durchlassöffnung eine umlaufende Dichtkante an der Stufe angeordnet ist, denn dadurch wird die Dichtwirkung, die mittels des Dichtelementes erzielt werden kann, verbessert. Es kann dadurch zuverlässig verhindert werden, dass während des Filterbetriebes Hydrauliköl über die Einführöffnung aus dem Gehäuse herausströmen kann.

Um sicherzustellen, dass beim Abnehmen es Deckels vom Gehäuse innerhalb sehr kurzer Zeit das gesamte Hydrauliköl, das sich zwischen der Auslassöffnung des Filterelementes und dem Deckel befindet, in den stromaufwärts des Filtermaterials gelegenen Bereich abströmen kann, ist es von Vorteil, wenn an der Stufe mehrere Durchlassöffnungen angeordnet sind. Bevorzugt bilden die Durchlassöffnungen in ihrer Gesamtheit einen von Stegen unterbrochenen Durchlassring aus. Sämtliche Durchlassöffnungen werden durch Abnehmen des Deckels vom Gehäuse gleichzeitig freigegeben. Der von den Durchlassöffnungen gebildete Durchlassring umgibt in radialem Abstand die Auslassöffnung des Filterelementes, so dass innerhalb kurzer Zeit eine beträchtliche Menge an Hydrauliköl aus dem Bereich zwischen der Auslassöffnung und dem Deckel über die Durchlassöffnungen herausströmen kann.

Von Vorteil ist es, wenn der Deckel mit der Seitenwand verschraubbar oder verrastbar ist, denn dies ermöglicht eine kostengünstige Herstellung des Gehäuses und stellt gleichzeitig eine einfache Handhabung der Filtervorrichtung beim Auswechseln eines Filterelementes sicher.

Um den stromaufwärts des Filtermaterials angeordneten Bereich, der das zu filtrierende Hydrauliköl aufnimmt, von dem stromabwärts der Auslassöffnung angeordneten Bereich, der gefiltertes Hydrauliköl aufnimmt, auf kostengünstige Weise zu trennen, ist bei einer besonders bevorzugten Ausführungsform der erfindungsgemäßen Filtervorrichtung vorgesehen, dass an der Endscheibe eine das Filtermaterial in Umfangsrichtung umgebende und schräg nach außen weisende Hülse angeordnet ist, die mit ihrem der Endscheibe abgewandten Randbereich an die Seitenwand anlegbar ist. Die Hülse bildet somit eine Zwischenwand aus zwischen dem stromaufwärts des Filtermaterials gelegenen Bereich und dem stromabwärts der Auslassöffnung gelegenen Bereich.

Bei einer vorteilhaften Ausführungsform ist vorgesehen, dass sich die Hülse in die der Endscheibe abgewandte Richtung konisch erweitert. Beim Einsetzen des Filterelementes in das Gehäuse legt sich der freie Randbereich der Hülse an die Seitenwand des Gehäuses an. Die Seitenwand kann hierzu einen mit dem freien Randbereich der Hülse zusammenwirkenden Anlagering aufweisen, der bezogen auf das der Einführöffnung zugewandte Ende der Seitenwand radial nach innen versetzt ist.

Vorzugsweise bildet die Hülse mit ihrem der Endscheibe abgewandten Randbereich eine Dichtlippe aus, die elastisch verformbar ist. Aufgrund des Druckunterschiedes, der zwischen dem stromaufwärts des Filterelements gelegenen Bereich und dem stromabwärts des Filterelements gelegenen Bereich herrscht, wird die Dichtlippe gegen die Seitenwand des Gehäuses gepresst und bildet dadurch einen dichten Abschluss des stromaufwärts des Filterelements gelegenen Bereiches.

Vorzugsweise sind die Hülse und die Endscheibe einstückig miteinander verbunden. Dies ermöglicht eine kostengünstige Herstellung der beiden Teile.

Wie eingangs erläutert, kann eine Filtervorrichtung der voranstehend genannten Art insbesondere bei einem Vorratstank für Hydrauliköl zum Einsatz kommen. Die Erfindung betrifft deshalb auch einen Vorratstank für Hydrauliköl mit einer derartigen Filtervorrichtung, wobei die Seitenwand der Filtervorrichtung einstückig mit einer Wand des Vorratstanks verbunden ist und in den Innenraum des Vorratstanks eintaucht. Die Filtervorrichtung ist bei einer derartigen Ausgestaltung in den Vorratstank integriert. Der Innenraum des Vorratstankes nimmt Hydrauliköl auf, das über die Filtervorrichtung und eine sich an diese anschließende Anschlussleitung dem Vorratstank entnommen werden kann, wobei es gleichzeitig gefiltert wird. Die Anschlussleitung kann in einem ungefähr in Höhe der Endscheibe angeordneten Bereich an die Seitenwand angeformt sein. Vorzugsweise sind ein Oberteil des Vorratstanks, die Seitenwand und die Anschlussleitung einstückig miteinander verbunden.

Bei einer bevorzugten Ausführungsform des erfindungsgemäßen Vorratstankes mit integrierter Filtervorrichtung bildet die Seitenwand der Filtervorrichtung ein Saugrohr aus, über das der Vorratstank absaugbar ist.

Die nachfolgende Beschreibung einer bevorzugten Ausführungsform der Erfindung dient im Zusammenhang mit der Zeichnung der näheren Erläuterung. Es zeigen:
- Figur 1:: eine teilweise aufgetrennte schaubildliche Darstellung einer in einen Vorratstank integrierten Filtervorrichtung mit einem Gehäuse, das mittels eines Deckels verschlossen ist und
- Figur 2:: eine schaubildliche Darstellung entsprechend Figur 1 mit vom Gehäuse abgenommenem Deckel.

In der Zeichnung ist eine Filtervorrichtung 10 dargestellt, die in einen Vorratstank 12 für Hydrauliköl integriert ist. Die Filtervorrichtung 10 umfasst ein Gehäuse, das von einer Seitenwand 14 gebildet wird, die einstückig mit einer Behälterwand 16 des Vorratstanks 12 verbunden ist und in den Innenraum 18 des Vorratstanks 12 eintaucht. Die Seitenwand 14 weist einen Mittelabschnitt 20 auf, in den eine Anschlussleitung in Form eines den Innenraum 18 durchgreifenden Saugstutzens 21 einmündet und der sich über eine Stufe 22 radial erweitert und in einen kolinear zum Mittelabschnitt 20 ausgerichteten Bund 23 übergeht. Der Bund 23 begrenzt mit seinem freien Ende eine Einführöffnung 24 und ist außenseitig einstückig mit der Behälterwand 16 des Vorratstankes 12 verbunden. An seinem dem Bund 23 abgewandten Ende geht der Mittelabschnitt 20 über eine konische Verengung 25 in einen kolinear zum Mittelabschnitt 20 ausgerichteten Endabschnitt 26 über, dessen freie Endkante 27 im Abstand zu einer in der Zeichnung nicht dargestellten Bodenwand des Vorratstankes 12 angeordnet ist.

Die Seitenwand 14 umgibt ein Filterelement 29, das über die Einführöffnung 24 in den von der Seitenwand 14 umgebenen Innenraum der Filtervorrichtung 10 einsetzbar ist. Das Filterelement 29 weist in üblicher Weise einen hohlzylinderförmigen Mantel 30 auf, der von einem sternförmig gefalteten Filtermaterial 31 gebildet wird und der stirnseitig eine Endscheibe 33 trägt, die eine zentrale Auslassöffnung 34 aufweist und die eine Manschette 35 umfasst, die den der Auslassöffnung 34 benachbarten Endbereich des Filtermaterials 31 in Umfangsrichtung umgibt. An die Manschette 35 schließt sich in axialer Richtung der Auslassöffnung 34 abgewandt eine schräg nach außen weisende, sich konisch erweiternde Hülse 36 an, die einstückig mit der Endscheibe 33 verbunden ist und mit ihrem der Endscheibe 33 abgewandten Randbereich eine Dichtlippe 37 ausbildet, mit der sie innenseitig am Endabschnitt 26 der Seitenwand 14 anliegt.

Das Filterelement 29 ist bezüglich seiner Mittelachse 39 rotationssymmetrisch ausgestaltet und steht in axialer Richtung über die freie Endkante 27 der Seitenwand 14 hervor, wobei es auch an seiner der Auslassöffnung 34 abgewandten Stirnseite, die in der Zeichnung nicht dargestellt ist, eine an sich bekannte Endscheibe trägt.

Die Einführöffnung 24 kann mittels eines Deckels 41 verschlossen werden, der eine die Einführöffnung 24 abdeckende Deckenwand 42 aufweist, von der in radialem Abstand zum Bund 23 der Seitenwand 14 ein bis in den Bereich des Mittelabschnitts 20 hineinreichender Kragen 43 absteht, der auf seiner Außenseite in Höhe der Stufe 22 und somit in axialem Abstand zur Deckenwand 42 einen umlaufenden Stützring 44 trägt. Im Bereich zwischen dem Stützring 44 und der Deckenwand 42 ist der Kragen 43 in Umfangsrichtung von einem Dichtring 46 umgeben, der vom Stützring 44 untergriffen wird und der auf seiner der Deckenwand 42 zugewandten Oberseite zwei an der Deckenwand 42 dicht anliegende Dichtlippen 47, 48 ausbildet, die jeweils ringförmig ausgestaltet und koaxial zueinander ausgerichtet sind.

Der Deckel 41 kann mit dem Mittelabschnitt 20 der Seitenwand 14 verschraubt werden, hierzu trägt der Kragen 43 an seiner Außenseite ein Außengewinde 50, das mit einem an die Innenseite des Mittelabschnitts 20 angeformten Innengewinde 51 zusammenwirkt.

In die Stufe 22 sind eine Vielzahl von Durchlassöffnungen 53 eingeformt, die in ihrer Gesamtheit einen von radial verlaufenden Stegen 54 unterbrochenen Durchlassring 55 ausbilden. Der Durchlassring 55 umgibt ungefähr in Höhe der Auslassöffnung 34 das Filterelement 29 in Umfangsrichtung und ist kolinear zur Mittelachse 39 ausgerichtet. Die Stufe 22 trägt oberseitig, das heißt der Einfuhröffnung 24 zugewandt, zwei umlaufende, koaxial zur Mittelachse 39 ausgerichtete ringförmige Dichtkanten 57, 58, zwischen denen der Durchlassring 55 verläuft.

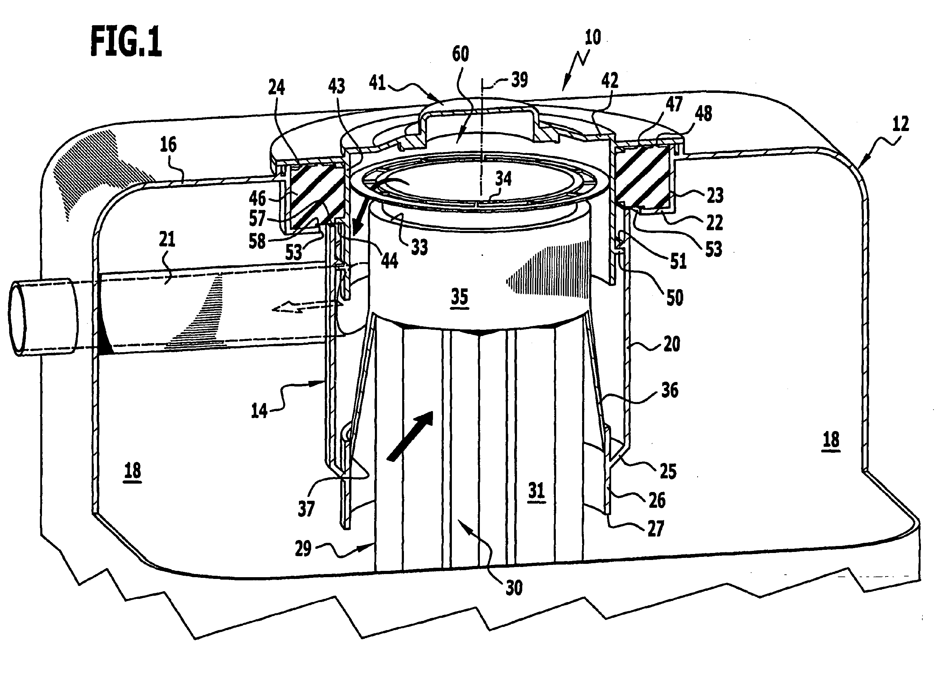

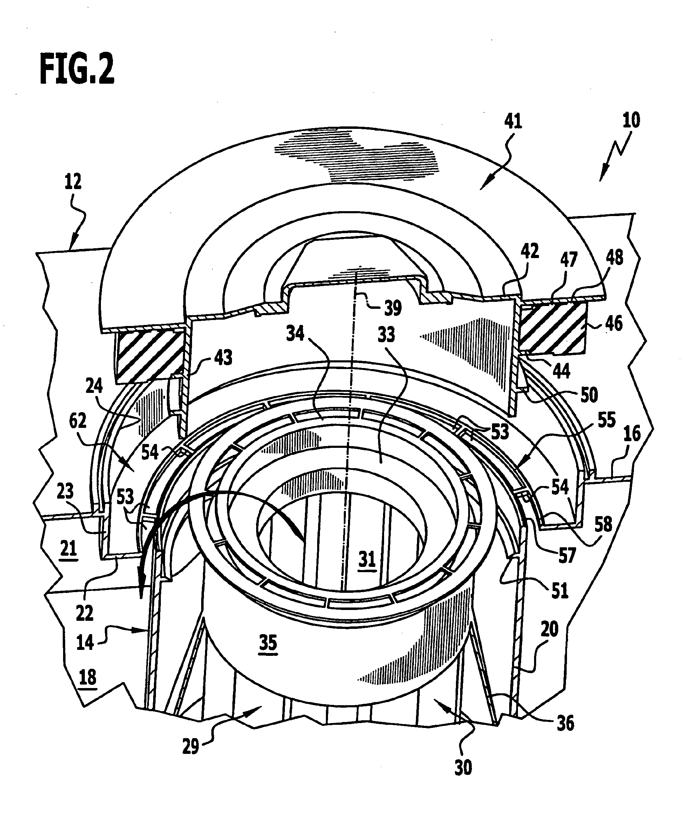

Ist der Deckel 41 mit der Seitenwand 14 der Filtervorrichtung 10 verschraubt, wie dies in Figur 1 dargestellt ist, so wird der Dichtring 46 mit seiner der Dekkenwand 42 abgewandten Unterseite gegen die Dichtkanten 57 und 58 gepresst. Wird jedoch der Deckel 41 von der Seitenwand 14 abgenommen, so wird dadurch auch der Dichtring 46 von den Dichtkanten 57, 58 abgehoben, und dadurch wird eine Strömungsverbindung freigegeben zwischen dem Innenbereich der Filtervorrichtung 10, der zwischen der Endscheibe 33 und dem Deckel 41 angeordnet ist, und dem bezogen auf die Durchströmungsrichtung des Hydrauliköls stromaufwärts des Filtermaterials 31 gelegenen Innenraum 18 des Vorratstanks 12. Dies wird aus Figur 2 deutlich.

Während des Filterbetriebes der Filtervorrichtung 10 kann Hydrauliköl, das über eine an sich bekannte und deshalb in der Zeichnung nicht dargestellte Einfüllöffnung in den Vorratstank 12 eingefüllt wurde, über die Filtervorrichtung 10 und den Saugstutzen 21 abgesaugt werden. Das Hydrauliköl durchströmt hierbei in radialer Richtung das Filtermaterial 31 von außen nach innen und kann anschließend in axialer Richtung über die Auslassöffnung 34 aus dem Filterelement 29 herausströmen. Über den Saugstutzen 21 kann dann das gefilterte Hydrauliköl dem Vorratstank 12 entnommen werden. Die Endscheibe 33 und die sich an diese anschließende Hülse 36 begrenzen in Kombination mit dem Mittelabschnitt 20 und dem Deckel 41 einen Reinbereich 60 der Filtervorrichtung 10, der während des Filterbetriebes vollständig mit gefiltertem Hydrauliköl gefüllt ist.

Soll das Filterelement 29 ausgetauscht werden, so kann hierzu der Deckel 41 abgeschraubt werden, um die Einführöffnung 24 freizugeben. Beim Abschrauben des Deckels 41 hebt sich der Dichtring 46 von den Dichtkanten 57, 58 ab, so daß gefiltertes Hydrauliköl aus dem Reinbereich 60 über die Durchlassöffnungen 53 in den Innenraum 18 des Vorratstanks gelangen kann, das heißt in den stromaufwärts des Filtermaterials 31 gelegenen Bereich, noch bevor der am Deckel 41 gehaltene Dichtring 46 die Einführöffnung 24 freigibt, denn die Durchlassöffnungen 53 sind in axialem Abstand zur Einführöffnung 24 angeordnet. Durch die Stufe 22 und den Bund 23 wird also eine Auffangwanne 62 definiert, die beim Abschrauben des Deckels 41 Hydrauliköl aufnehmen kann, das über die Durchlassöffnungen 53 entweichen kann. Folglich wird der Reinbereich 60 beim Abnehmen des Deckels zumindest teilweise geleert und damit die Gefahr verringert, dass Hydrauliköl beim Abnehmen des Deckels 41 über die Einführöffnung 24 aus der Filtervorrichtung 10 herausströmen und die Oberseite des Vorratstanks 12 verschmutzen kann.

Wird nach dem Auswechseln des Filterelements 29 der Deckel 41 wieder mit der Seitenwand 14 verschraubt, so legt sich der Dichtring 46 an die Dichtkanten 57, 58 an und die Strömungsverbindung zwischen dem Reinbereich 60 der Filtervorrichtung 10 und dem Innenraum 18 ist unterbrochen. Es kann dann der Filterbetrieb der Filtervorrichtung 10 wieder aufgenommen werden.

## Patentansprüche

1. Filtervorrichtung zum Filtrieren eines Hydrauliköls, mit einem Gehäuse (14), das eine Einführöffnung (24) aufweist, die mittels eines Deckels (41) dicht verschließbar ist, und in dem ein Filterelement (29) angeordnet ist, das einen hohlzylinderförmigen Mantel (30) mit einem Filtermaterial (31) umfaßt, an dessen dem Deckel (41) zugewandter Stirnseite eine Endscheibe (33) mit einer Auslassöffnung (34) angeordnet ist, wobei das Hydrauliköl dem Filterelement (29) in radialer Richtung zuführbar und über die Auslassöffnung (34) abführbar ist, wobei durch Abnehmen des Deckels (41) vom Gehäuse (14) zumindest eine Durchlassöffnung (53) freigebbar ist, über die der Bereich zwischen der Auslassöffnung (34) und dem Deckel (41) mit dem stromaufwärts des Filtermaterials (31) gelegenen Bereich verbindbar ist, wobei das Gehäuse eine rohrförmige Seitenwand (14) ausbildet, die zumindest den dem Deckel (41) zugewandten Endbereich des Filterelements (29) in Umfangsrichtung umgibt und die sich in Richtung der Einführöffnung (24) über eine Stufe (22) erweitert, wobei die mindestens eine Durchlassöffnung (53) an der Stufe (22) angeordnet ist und wobei die Filtervorrichtung (10) ein am Deckel (41) gehaltenes Dichtelement (46) aufweist, das bei geschlossenem Gehäuse (14) an der mindestens einen Durchlassöffnung (53) dicht anliegt und das durch Abnehmen des Deckels (41) vom Gehäuse (14) von der mindestens einen Durchiassöffnung (53) entfernbar ist.

2. Filtervorrichtung nach Anspruch 1, **dadurch gekennzeichnet, dass** die Filtervorrichtung (10) eine Auffangwanne (62) umfasst, die zwischen der Endscheibe (33) und dem Deckel (41) angeordnet ist und die die mindestens eine Durchlassöffnung (53) aufweist.

3. Filtervorrichtung nach Anspruch 1 oder 2, **dadurch gekennzeichnet, dass** der Deckel (41) mittels des Dichtelements (46) flüssigkeitsdicht mit dem Gehäuse (14) verbindbar ist.

4. Filtervorrichtung nach Anspruch 1, 2 oder 3, **dadurch gekennzeichnet, dass** das Dichtelement (46) in axialer Richtung auf die mindestens eine Durchgangsöffnung (53) aufsetzbar und von dieser abhebbar ist.

5. Filtervorrichtung nach einem der Ansprüche 1 bis 4, **dadurch gekennzeichnet, dass** der Deckel (41) das Dichtelement (46) untergreift.

6. Filtervorrichtung nach einem der Ansprüche 1 bis 5, **dadurch gekennzeichnet, dass** der Deckel (41) einen in das Gehäuse (14) eintauchenden Kragen (43) umfasst, an dem das Dichtelement (46) angeordnet ist.

7. Filtervorrichtung nach Anspruch 6, **dadurch gekennzeichnet, dass** das Dichtelement als den Kragen (43) in Umfangsrichtung umgebender Dichtring (46) ausgestaltet ist.

8. Filtervorrichtung nach einem der voranstehenden Ansprüche, **dadurch gekennzeichnet, dass** die Einführöffnung (24) den Rand einer Auffangwanne (62) ausbildet, deren Boden von der Stufe (22) und deren Umfangswand von einem von der Stufe (22) abstehenden Bund (23) der Seitenwand (14) gebildet ist.

9. Filtervorrichtung nach einem der voranstehenden Ansprüche, **dadurch gekennzeichnet, dass** die Stufe (22) bezogen auf die Mittelachse (39) des Filterelements (29) radial nach außen verläuft.

10. Filtervorrichtung nach einem der voranstehenden Ansprüche, **dadurch gekennzeichnet, dass** an der Stufe (22) auf der radial innen gelegenen Seite der mindestens einen Durchlassöffnung (53) eine umlaufende Dichtkante (57) angeordnet ist.

11. Filtervorrichtung nach einem der voranstehenden Ansprüche, **dadurch gekennzeichnet, dass** an der Stufe (22) auf der radial außen gelegenen Seite der mindestens einen Durchlassöffnung (53) eine umlaufende Dichtkante (58) angeordnet ist.

12. Filtervorrichtung nach einem der voranstehenden Ansprüche, **dadurch gekennzeichnet, dass** an der Stufe (22) mehrere Durchlassöffnungen (53) angeordnet sind, die in ihrer Gesamtheit einen von Stegen (54) unterbrochenen Durchlassring (55) ausbilden.

13. Filtervorrichtung nach einem der voranstehenden Ansprüche, **dadurch gekennzeichnet, dass** der Deckel (41) mit der Seitenwand (14) verschraubbar oder verrastbar ist.

14. Filtervorrichtung nach einem der voranstehenden Ansprüche, **dadurch gekennzeichnet, dass** an der Endscheibe (33) eine das Filtermaterial (31) in Umfangsrichtung umgebende und schräg nach außen weisende Hülse (36) angeordnet ist, die mit ihrem der Endscheibe (33) abgewandten freien Randbereich (37) an die Seitenwand (14) anlegbar ist.

15. Filtervorrichtung nach Anspruch 14, **dadurch gekennzeichnet, dass** sich die Hülse (36) in die der Endscheibe (33) abgewandte Richtung konisch erweitert.

16. Filtervorrichtung nach Anspruch 14 oder 15, **dadurch gekennzeichnet, dass** die Hülse (36) mit ihrem der Endscheibe (33) abgewandten Randbereich eine Dichtlippe (37) ausbildet, die elastisch verformbar ist.

17. Filtervorrichtung nach Anspruch 14, 15 oder 16, **dadurch gekennzeichnet, dass** die Hülse (36) und die Endscheibe (33) einstückig miteinander verbunden sind.

18. Vorratstank für Hydrauliköl mit einer Filtervorrichtung nach einem der voranstehenden Ansprüche, **dadurch gekennzeichnet dass** die Seitenwand (14) einstückig mit einer Behälterwand (16) des Vorratstanks (12) verbunden ist und in den Innenraum (18) des Vorratstanks eintaucht.

19. Vorratstank nach Anspruch 18, **dadurch gekennzeichnet, dass** die Seitenwand (14) ein Saugrohr ausbildet, über das der Vorratstank (12) absaugbar ist.

## Claims

1. Filter device for filtering hydraulic oil, with a housing (14) which has an inlet opening (24) that can be sealed tight by means of a lid (41), and arranged in which is a filter element (29) that comprises a casing (30) in the shape of a hollow cylinder with a filter material (31), on whose end face facing the lid (41) there is arranged an end disk (33) with an outlet opening (34), wherein the hydraulic oil can be supplied to the filter element (29) in a radial direction and drained via the outlet opening (34), wherein by removing the lid (41) from the housing (14), at least one passage opening (53) can be released, via which the area between the outlet opening (34) and the lid (41) can be connected to the area located upstream of the filter material (31), wherein the housing forms a tubular side wall (14) which surrounds at least the end area of the filter element (29) facing the lid (41) in a circumferential direction, and which expands in the direction of the inlet opening (24) via a step (22), wherein the at least one passage opening (53) is arranged on the step (22), and wherein the filter device (10) has a sealing element (46) which is held on the lid (41) and which, when the housing (14) is closed, lies tight against the at least one passage opening (53), and which can be removed from the at least one passage opening (53) by removing the lid (41) from the housing (14).

2. Filter device according to claim 1, **characterised in that** the filter device (10) comprises a collection trough (62) which is arranged between the end disk (33) and the lid (41), and which has at least one passage opening (53).

3. Filter device according to claim 1 or 2, **characterised in that** the lid (41) can be connected to the housing (14) in a liquid-tight manner by means of the sealing element (46).

4. Filter device according to claim 1, 2 or 3, **characterised in that** the sealing element (46) can be placed onto and removed from the at least one passage opening (53) in an axial direction.

5. Filter device according to one of the claims 1 to 4, **characterised in that** the lid (41) grips under the sealing element (46).

6. Filter device according to one of the claims 1 to 5, **characterised in that** the lid (41) comprises a collar (43) which dips into the housing (14) and on which the sealing element (46) is arranged.

7. Filter device according to claim 6, **characterised in that** the sealing element is designed as a sealing ring (46) that surrounds the collar (43) in the circumferential direction.

8. Filter device according to one of the preceding claims, **characterised in that** the inlet opening (24) forms the rim of a collection trough (62) whose base is formed by the step (22) and whose peripheral wall is formed by a collar (23) of the side wall (14) which projects away from the step (22).

9. Filter device according to one of the preceding claims, **characterised in that** in relation to the central axis (39) of the filter element (29), the step (22) runs radially outwards.

10. Filter device according to one of the preceding claims, **characterised in that** arranged on the step (22), on the radially inner side of the at least one passage opening (53), is a sealing edge (57) that runs all round.

11. Filter device according to one of the preceding claims, **characterised in that** arranged on the step (22), on the radially outer side of the at least one passage opening (53), is a sealing edge (58) that runs all round.

12. Filter device according to one of the preceding claims, **characterised in that** arranged on the step (22) are several passage openings (53), which in their totality form a passage ring (55) that is interrupted by webs (54).

13. Filter device according to one of the preceding claims, **characterised in that** the lid (41) can be screwed onto or snapped onto the side wall (14).

14. Filter device according to one of the preceding claims, **characterised in that** arranged on the end disk (33) is a sleeve (36) which surrounds the filter material (31) in a circumferential direction and which points obliquely outwards and which, with its free edge area (37) facing away from the end disk (33), can be placed onto the side wall (14).

15. Filter device according to claim 14, **characterised in that** the sleeve (36) expands conically in the direction facing away from the end disk (33).

16. Filter device according to claim 14 or 15, **characterised in that** with its edge area facing away from the end disk (33), the sleeve (36) forms a sealing lip (37) that can be elastically deformed.

17. Filter device according to claim 14, 15 or 16, **characterised in that** the sleeve (36) and the end disk (33) are joined to one another in one piece.

18. Reservoir tank for hydraulic oil with a filter device according to one of the preceding claims, **characterised in that** the side wall (14) is joined in one piece to a container wall (16) of the reservoir tank (12) and projects into the interior (18) of the reservoir tank.

19. Reservoir tank according to claim 18, **characterised in that** the side wall (14) forms a suction pipe, via which the reservoir tank (12) can be aspirated.

## Revendications

1. Dispositif de filtrage pour le filtrage d'une huile hydraulique, ledit dispositif comportant un boîtier (14) qui possède une ouverture d'entrée (24) pouvant être fermée de façon étanche par un couvercle (41) et dans lequel est disposé un élément de filtrage (29) qui comporte une enveloppe (30) en forme de cylindre creux constituée d'un matériau de filtrage (31), et qui possède, sur sa face frontale située du côté du couvercle (41), un disque d'extrémité (33) qui est doté d'une ouverture de sortie (34), l'huile hydraulique pouvant être amenée à l'élément de filtrage (29) dans une direction radiale et pouvant être évacuée par l'ouverture de sortie (34), au moins une ouverture de passage (53), par laquelle la région comprise entre l'ouverture de sortie (34) et le couvercle (41) peut être reliée à la région située en aval du matériau de filtrage (31), pouvant être dégagée en ôtant le couvercle (41) du boîtier (14), le boîtier formant une paroi latérale tubulaire (14) qui entoure dans la direction circonférentielle au moins la région d'extrémité, du côté du couvercle (41), de l'élément de filtrage (29) et qui s'élargit par un gradin (22) en direction de l'ouverture d'entrée (24), ladite au moins une ouverture de passage (53) étant ménagée au niveau du gradin (22) et le dispositif de filtrage (10) comportant un élément d'étanchéité (46) maintenu sur le couvercle (41), qui porte de façon étanche contre ladite au moins une ouverture de passage (53) lorsque le boîtier (14) est fermé, et qui peut être retiré de ladite au moins une ouverture de passage en ôtant le couvercle (41) du boîtier (14).

2. Dispositif de filtrage selon la revendication 1, **caractérisé en ce que** le dispositif de filtrage (10) comporte une cuvette de réception (62) qui est disposée entre le disque d'extrémité (33) et le couvercle (41), et qui possède ladite au moins une ouverture de passage (53).

3. Dispositif de filtrage selon la revendication 1 ou 2, **caractérisé en ce que** le couvercle (41) peut être relié au boîtier (14), de façon étanche aux liquides, par l'élément d'étanchéité (46).

4. Dispositif de filtrage selon la revendication 1, 2 ou 3, **caractérisé en ce que** l'élément d'étanchéité (46) peut être placé sur ladite moins une ouverture de passage (53), et être retiré de celle-ci, dans une direction axiale.

5. Dispositif de filtrage selon l'une des revendications 1 à 4, **caractérisé en ce que** le couvercle (41) saisit par en-dessous l'élément d'étanchéité (46).

6. Dispositif de filtrage selon l'une des revendications 1 à 5, **caractérisé en ce que** le couvercle (41) comporte un rebord (43) qui pénètre dans le boîtier (14), et sur lequel est disposé l'élément d'étanchéité (46).

7. Dispositif de filtrage selon la revendication 6, **caractérisé en ce que** l'élément d'étanchéité est conformé en bague d'étanchéité (46) entourant le rebord (43) dans la direction circonférentielle.

8. Dispositif de filtrage selon l'une des revendications précédentes, **caractérisé en ce que** l'ouverture d'entrée (24) forme le bord d'une cuvette de réception (62) dont le fond est formé par le gradin (22), et dont la paroi périphérique est formée par une collerette (23), s'étendant depuis le gradin (22), de la paroi latérale (14).

9. Dispositif de filtrage selon l'une des revendications précédentes, **caractérisé en ce que** le gradin (22) s'étend radialement vers l'extérieur par référence à l'axe central (39) de l'élément de filtrage (29).

10. Dispositif de filtrage selon l'une des revendications précédentes, **caractérisé en ce qu'**un bord d'étanchéité périphérique (57) est disposé au niveau du gradin (22) sur le côté radialement intérieur de ladite au moins une ouverture de passage (53).

11. Dispositif de filtrage selon l'une des revendications précédentes, **caractérisé en ce qu'**un bord d'étanchéité périphérique (58) est disposé au niveau du gradin (22) sur le côté radialement extérieur de ladite au moins une ouverture de passage (53).

12. Dispositif de filtrage selon l'une des revendications précédentes, **caractérisé en ce que** plusieurs ouvertures de passage (53), qui forment toutes ensemble une bague de passage (55) entrecoupée de ligaments (54), sont ménagées au niveau du gradin (22).

13. Dispositif de filtrage selon l'une des revendications précédentes, **caractérisé en ce que** le couvercle (41) peut être relié à la paroi latérale (14) par vissage ou encliquetage.

14. Dispositif de filtrage selon l'une des revendications précédentes, **caractérisé en ce que** sur le disque d'extrémité (33) est disposé un manchon (36) qui entoure le matériau de filtrage (31) dans une direction circonférentielle, qui est dirigé obliquement vers l'extérieur et dont la région de bordure libre (37), opposée au disque d'extrémité (33), peut s'appliquer sur la paroi latérale (14).

15. Dispositif de filtrage selon la revendication 14, **caractérisé en ce que** le manchon (36) s'élargit coniquement dans la direction opposée au disque d'extrémité (33).

16. Dispositif de filtrage selon la revendication 14 ou 15, **caractérisé en ce que** le manchon (36) forme, au niveau de sa région de bordure opposée au disque d'extrémité (33), une lèvre d'étanchéité (37) qui est déformable élastiquement.

17. Dispositif de filtrage selon la revendication 14, 15 ou 16, **caractérisé en ce que** le manchon (36) et le disque d'extrémité (33) sont reliés l'un à l'autre d'une seule pièce.

18. Réservoir d'huile hydraulique comportant un dispositif de filtrage selon l'une des revendications précédentes, **caractérisé en ce que** la paroi latérale (14) est reliée d'une seule pièce à une paroi de conteneur (16) du réservoir (12), et pénètre dans l'espace intérieur (18) du réservoir.

19. Réservoir selon la revendication 18, **caractérisé en ce que** la paroi latérale (14) forme un tube d'aspiration permettant de vider le réservoir (12) par aspiration.
